# EUROPÄISCHE PATENTANMELDUNG

(11) **EP 1 484 629 A1**
(43) Veröffentlichungstag der Anmeldung: **08.12.2004**
(21) Anmeldenummer: 04013022.1
(22) Anmeldetag: 02.06.2004
(51) Int. Cl.: G02C 13/00

(54) **Verfahren und Vorrichtung zum Behandeln von Komponenten wie optischen Gläsern, insbesondere Brillengläsern**

(30) Priorität: 02.06.2003 DE 10325113
(71) Anmelder: Cotec GnbH, 63486 Bruchköbel (DE)
(72) Erfinder: Fliedner, Michael, 63486 Bruchköbel (DE)
(74) Vertreter: Stoffregen, Hans-Herbert, Dr. Dipl.-Phys.

(57) **Zusammenfassung**

Die Erfindung bezieht sich auf ein Verfahren und eine Vorrichtung zum Behandeln wie Reinigen oder Beschichten von Komponenten (16) wie optischen Gläsern, insbesondere Brillengläsern. Um eine flexible Reinigung von Komponenten geringer Losgröße bei individueller Prozessanpassung an die Komponenteneigenschaften zur Verfügung zu stellen, wird vorgeschlagen,
- dass die Komponenten (16) einer hermetisch abdichtbaren Kammer (14) zugeführt werden,
- dass der Kammer (14) individuell auf die Komponenten (16) abgestimmte Medien zugeführt werden und
- dass die Komponenten (16) während des gesamten Behandlungsverfahrens in der Kammer (14) verbleiben.

Die Vorrichtung zeichnet sich dadurch aus,
- dass die Vorrichtung eine Kammer (14) zur Aufnahme der zumindest einen Komponente (16) aufweist,
- dass die zumindest eine Komponente (16) mittels eines Komponententrägers (20) in die Kammer (14) einbringbar ist, wobei der Komponententräger (20) gleichzeitig die Kammer (14) gegenüber der Umwelt hermetisch abdichtet,
- dass die Kammer (14) mit einem oder mehreren Medienbehältern (34) und/oder Kühl-, Temperier-, Strahlungsaggregaten gekoppelt ist und Anschlüsse für eine Medienzufuhr und -abfuhr aufweist.

## Beschreibung

Die Erfindung bezieht sich auf ein Verfahren zum Behandeln wie Reinigen und Beschichten von Komponenten wie optischen Gläsern, insbesondere Brillengläsern nach dem Oberbegriff des Anspruchs 1 sowie auf eine Vorrichtung zur Durchführung des Verfahrens nach dem Oberbegriff des Anspruchs 10.

Aus dem Stand der Technik ist es bekannt, Komponenten beispielsweise mittels Ultraschallreinigung oder Bürstenreinigung zu reinigen. Hierzu wird ein Verfahren eingesetzt, bei dem die Komponenten gesammelt, in Körbe eingesetzt und dann manuell oder mittels eines Automaten einzelnen, örtlich getrennten Reinigungs-, Spül- und Trocknungsbecken zugeführt werden.

Nachteilig an dieser Verfahrensweise ist, dass durch das Sammeln der Komponenten Verwechselungen in der Zuordnung sowohl beim Bestücken als auch beim Entladen der Körbe nach dem Reinigungsvorgang nicht ausgeschlossen sind. Durch die große Anzahl der Komponenten pro Korb kann das Verfahren nicht auf die individuellen Reinigungsparameter eines einzelnen Komponentenmaterials oder eines auf dem Komponentenmaterial befindlichen Lackes angepasst werden. Zudem werden die bei der Reinigung verwendeten Reinigungsmedien in einzelnen Becken angesetzt und sind in Konzentration und Temperatur nach dem Ansatz nicht variabel auf die Komponente abstimmbar. Zum Austausch der Reinigungsmedien muss das Reinigungsverfahren unterbrochen werden, was mit zusätzlichen Kosten verbunden ist.

Zur Unterstützung des Reinigungsverfahrens wird nach dem Stand der Technik auch die Ultraschallreinigung eingesetzt, was jedoch mit dem Nachteil verbunden ist, dass sich die Ultraschallleistung nicht auf die individuelle Komponente anpassen lässt. Schließlich muss die gesamte Anlage unter Reinraumbedingungen betrieben werden, um eine Schmutzeinbringung in die Bäder zu vermeiden, was ebenfalls mit hohen Kosten verbunden ist.

Des Weiteren werden nach dem Stand der Technik Trocknungsverfahren angewendet, bei denen die Komponenten statisch aufladen können, was zu Schmutzanhaftung nach der Reinigung führen kann.

Des Weiteren ist bekannt, dass eine Reinigung in einer kontinuierlichen Durchlaufanlage erfolgt, wobei die Reinigungswirkung des Mediums durch mechanische Einwirkung wie Bürsteneinwirkung unterstützt wird. Die Komponenten werden mittels eines Handhabungssystems paarweise oder einzeln auf ein kontinuierlich laufendes Förderband gelegt und derart gehalten, dass sie durch den mechanischen Bürstenreinigungsprozess in ihrer Position verbleiben. So kann eine paarweise Zuordnung der Komponenten erfolgen, was die Verwechselungsgefahr reduziert. Auch muss zum Medienwechsel die Anlage nicht angehalten werden, da die Medienversorgung redundant vorliegt. Somit werden einige Nachteile des oben genannten Verfahrens beseitigt, wobei jedoch folgende Nachteile weiterhin vorhanden sind. Auch bei diesem Verfahren kann das Reinigungsmedium die Verweilzeit der Komponenten im Medium sowie die Reinigungsintensität der mechanischen Bürstenreinigung nicht der individuellen Komponentenart angepasst werden. Auch verändert sich das Reinigungsergebnis während der Einsatzzeit der Bürsten aufgrund der Abnutzung der Bürsten. Zudem erfolgt nicht eine vollkommene Benetzung der Komponente, so dass in Teilbereichen Restverunreinigungen anhaften können. Durch Tensideinwirkung kommt es zum Quellen der Bürstenfasem und damit bedingt zu unkontrolliertem Austreten von Weichmachern, die wiederum die zu behandelnde Komponente kontaminieren können. Schließlich handelt es sich um einen kontinuierlichen Prozess, der für eine bestimmte minimale Kapazität angepasst ist und nicht modular ausgebaut werden kann.

Davon ausgehend liegt der vorliegenden Erfindung das Problem zu Grunde, ein Verfahren und eine Vorrichtung zum Behandeln von Komponenten wie optischen Gläsern, insbesondere Brillengläsern derart weiterzubilden, dass eine flexible Reinigung von Komponenten geringer Losgröße bei individueller Prozessanpassung an die Komponenteneigenschaften zur Verfügung gestellt werden kann.

Das Problem wird u. a. durch ein Verfahren dadurch gelöst, dass folgende Verfahrensschritte aufweist:
- dass die Komponenten vorzugsweise einzeln oder paarweise einer hermetisch abdichtbaren Reinigungskammer zugeführt werden,
- dass der Kammer individuell auf die Komponenten abgestimmte Medien zugeführt werden und
- dass die Komponenten während des gesamten Behandlungsverfahrens in der Kammer verbleiben.

Das erfindungsgemäße Verfahren zeichnet sich gegenüber den aus dem Stand der Technik bekannten Verfahren dadurch aus, dass die Medien wie Reinigungsmedien zu den Komponenten gebracht werden, so dass eine individuelle Anpassung an die Komponentenbedingungen vorgenommen werden kann. Aufgrund der Behandlung wie Reinigung von einzelnen Komponenten oder Komponentenpaaren kann eine individuelle Prozessanpassung erfolgen. Da die Komponenten für den Zeitraum der Reinigung und Trocknung in einer einzigen hermetisch abgedichteten Reinigungskammer verbleiben, können somit im Gegensatz zu den Verfahren nach dem Stand der Technik keine Schadstoffe an die Umwelt gelangen.

In einem bevorzugten Verfahrensschritt ist vorgesehen, dass der einzelnen Komponente oder dem Komponentenpaar eine Kodierung für Reinigungsparameter zugeordnet wird, welche beim Einschleusen des oder der Komponenten in die Reinigungsanlage abgefragt wird, um die Reinigungsparameter individuell auf die zu reinigenden Komponenten einzustellen.

Ein weiterer bevorzugter Verfahrensschritt sieht vor, dass die zu reinigende Komponente nach Erfassung seiner spezifischen Kodierung in die vorzugsweise als Reinigungskammer ausgebildete Kammer eingebracht und diese sodann hennetisch verschlossen wird, wobei die folgenden Verfahrensschritte durchgeführt werden:
- Befüllen der Kammer mit einem Medium wie Reinigungsmedium aus einem Medienbehälter,
- Einwirken des Mediums über eine komponentenabhängig einstellbare Zeitdauer,
- Abpumpen des Mediums wie Reinigungsmediums in den Medienbehälter und
- Befüllen der Kammer mit einem Medium wie Spülmedium aus einem weiteren Medienbehälter sowie
- Abpumpen des Mediums wie Spülmediums in den weiteren Medienbehälter.

Die Reinigungsmedien können individuell auf die zu behandelnde Komponente beispielsweise in ihrem PH-Wert, ihrer Temperatur oder der Verweildauer in der Kammer angepasst werden. Die hermetisch abgedichtete Reinigungskammer stellt sicher, dass keine Schadstoffe an die Umgebung abgeführt werden. Insoweit können auch umweltaggressive Medien zur Reinigung verwendet werden, die bei den aus dem Stand der Technik verwendeten Verfahren aus umweltschutztechnischen Gründen bisher nicht eingesetzt werden können.

Des Weiteren ist vorgesehen, dass die Einwirkzeit durch Ultraschall- und/oder mechanische Kontakteinwirkung auf die Oberfläche unterstützt wird. Dabei kann die Ultraschalleistung, Ultraschallfrequenz und die Einwirkzeit des Ultraschalls auf jede Komponente abgestimmt werden.

Ferner können Strahlungsquellen und/oder Düsen den Reinigungsprozess aktivieren, so dass insgesamt eine intensivere Reinigung durchgeführt werden kann.

Nach dem Reinigungsvorgang wird vorzugsweise ein Spülvorgang durchgeführt, der folgende Verfahrensschritte umfasst:
- Spülen mit sofortiger Abführung des Spülmediums und/oder
- Befüllen der Reinigungskammer mit dem Spülmedium und Ultraschall/mechanische Einwirkung.

Beim Spülvorgang kann die Komponente mit Stadtwasser bestimmter Härte und anschließend mit Wasser mit einem Leitwert im Bereich 0,05 µS bis 0,5 µS (DI-Wasser, deionisiertes Wasser) behandelt werden. Auch kann eine Kombination aus Sprühspülen und Befüllen der Reinigungskammer mit Spülmedium und Ultraschall-/mechanischer Einwirkung erfolgen.

Nach dem Spülvorgang wird vorzugsweise ein Trocknungsvorgang durchgeführt, der folgende Verfahrensschritte umfasst:

Fluten der Reinigungskammer mit DI-Wasser und langsames Ablassen des Wassers, wobei die Ablassgeschwindigkeit des Wassers derart eingestellt wird, dass ein Abreißen des ablaufenden Films vermieden wird und somit eine trockene Oberfläche der Komponente zurückbleibt.

Dabei kann das DI-Wasser eine Temperatur im Bereich von 10 °C bis 95 °C, insbesondere 35 °C bis 60 °C oder vorzugsweise mit einer maximalen für die Komponente zulässigen Temperatur bereitgestellt werden.

Neben dem oben beschriebenen Trocknungsverfahren kann die Trocknung durch Vakuumtrocknung erfolgen, wobei die Reinigungskammer evakuiert wird und der Druck und die Temperatur derart geregelt werden, dass die Komponente sowie die Komponentenhalterung getrocknet werden.

Des Weiteren kann gemäß eines vorteilhaften Verfahrensschrittes der Trocknungsprozess derart durchgeführt werden, dass die Spülkammer mit einem Verdrängungsmedium oder mehreren Verdrängungsmedien wie trans-1,2-Dichlorethen oder Decafluorpenten oder eine Mischung aus beiden geflutet wird, wobei anschließend das verdrängte Wasser aus der Reinigungskammer ausgetrieben und in einem separaten Medienbehälter von der Oberfläche des Verdrängungsmediums entfernt wird. Der Trocknungsvorgang kann beispielsweise durch Strahlungsenergie und/oder Druckreduzierung unterstützt werden.

Schließlich kann die Komponente in der Reinigungskammer einer Vakuumentgasung und/oder einer UV- und/oder IR-Bestrahlung unterzogen werden.

Das erfindungsgemäße Verfahren kann auch die Beschichtung von Komponenten umfassen, wobei der Kammer entsprechende Beschichtungsmedien zugeführt werden.

Des Weiteren bezieht sich die Erfindung auf eine Vorrichtung zum Behandeln wie Reinigen oder Beschichten von Komponenten wie optischen Gläsern, insbesondere Brillengläsern, die sich dadurch auszeichnet,
- dass die Vorrichtung eine Kammer zur Aufnahme zumindest einer Komponente oder vorzugsweise eines Komponentenpaares aufweist,
- dass die zumindest eine Komponente mittels eines Komponentenpaares in die Kammer einbringbar sind, wobei der Komponententräger gleichzeitig die Kammer gegenüber der Umwelt hermetisch abdichtet,
- dass die Kammer mit ein oder mehreren Medienbehältern und/oder Kühl-, Temperier-, Strahlungsaggregaten gekoppelt ist und Anschlüsse für eine Medienzufuhr und/oder -abfuhr aufweist.

Die Kammer ist zur Aufnahme der zumindest einen Komponente oder eines Komponentenpaares ausgebildet. Dabei kann der Komponententräger fest mit der Kammer verbunden oder als mobile Transporteinheit ausgebildet sein. Eine Weiterbildung sieht vor, dass die Kammer über eine Belade-/Entladeschleuse (Load-Lock-System) mit Komponenten bestückt wird.

Bei dieser Ausführungsform werden die Komponenten einzeln oder paarweise mittels Werkstückträgern zugeführt und mit einem Handling-System aus diesen entnommen und in den fest mit der Kammer verbundenen Komponententräger eingesetzt. Alternativ besteht die Möglichkeit, dass die Komponenten mittels des Handling-Systems in den Komponententräger eingesetzt werden und dieser sodann in die Kammer eingesetzt wird.

Dabei ist vorgesehen, dass die Kammer Zufluss- und/oder Abflussanschlüsse für die Medienzufuhr aufweist. Ferner können Düsen zur Einleitung von Spül- und Reinigungsmedien vorgesehen sein.

Zur Einwirkung von einer Ultraschalleistung auf die zumindest eine Komponente kann die Kammer mit einem oder mehreren Ultraschallschwingern versehen sein.

Eine weitere Ausführungsform sieht vor, dass die Kammer eine mechanische Reinigungsvorrichtung wie Bürsteneinheit zur mechanischen Reinigung der zumindest einen Komponente umfasst.

Ferner kann die Kammer Strahlungsquellen wie UV- und/oder IR-Quelle o. ä. aufweisen.

Eine besonders bevorzugte Ausführungsform sieht vor, dass die Kammer Teil einer Reinigungsanlage ist, umfassend:
- eine Transporteinheit zum Transportieren der auf einem Transportmittel einzeln oder paarweise angeordneten Komponenten, wobei die Transporteinheit einer Kodierung zugeordnet ist, welche mittels einer Lasereinrichtung gelesen und einer Steuereinheit zugeleitet wird, wobei sodann entsprechende Prozessparameter zur Behandlung wie Reinigung, Trocknung und/oder Beschichtung bereitgestellt werden und wobei die entsprechenden Medien über Zuleitungen aus ein oder mehreren Medienbehältern zur Verfügung gestellt werden und wobei Handhabungsmittel vorgegeben sind, welche die Komponenten der Kammer zuführen und diese gegenüber der Kammer hermetisch abdichten.

Der Komponententräger kann in besonders bevorzugter Ausführungsform einen beweglichen, vorzugsweise rotierbaren Ringträger zur Halterung der Komponente aufweisen, so dass die Komponente in der Kammer rotierbar aufgehängt ist, wodurch eine verbesserte Reinigungswirkung erreicht wird.

Weitere Einzelheiten, Vorteile und Merkmale der Erfindung ergeben sich nicht nur aus den Ansprüchen, den diesen zu entnehmenden Merkmalen - für sich oder in Kombination -, sondern auch aus der nachfolgenden Beschreibung eines den Zeichnungen zu entnehmenden bevorzugten Ausführungsbeispiels.

Es zeigen:
- Fig. 1: einen schematischen Aufbau einer Behandlungsanlage mit der erfindungsgemäßen Behandlungskammer,
- Fig. 2: eine perspektivische Ansicht der Behandlungskammer mit ausgefahrenem Komponententräger,
- Fig. 3: eine perspektivische Ansicht der Behandlungskammer mit eingeschobenem Komponententräger,
- Fig. 4: eine Draufsicht der Behandlungskammer,
- Fig. 5: einen Längsschnitt der Behandlungskammer und
- Fig. 6: einen Querschnitt der Behandlungskammer.

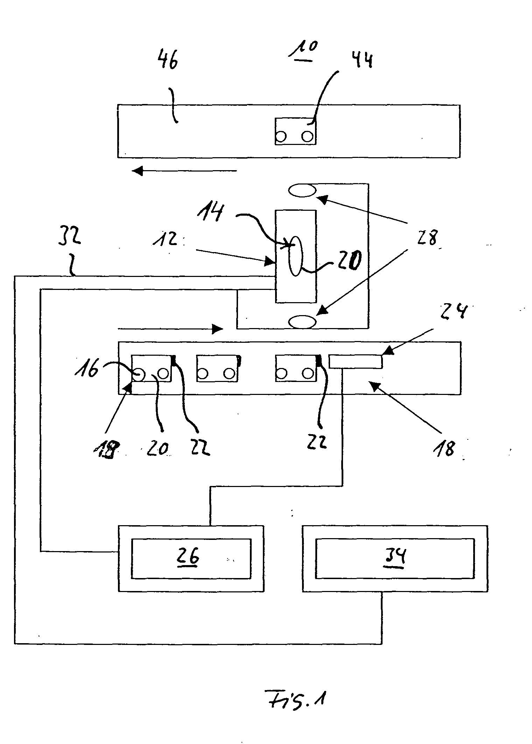

Fig. 1 zeigt rein schematisch eine Anlage 10, umfassend zumindest eine Behandlungseinrichtung 12 mit einer Behandlungskammer 14, der zu behandelnde Komponenten 16, insbesondere optische Gläser wie Brillengläser einzeln oder paarweise über ein Transportsystem 18 zugeführt werden. Die Behandlungseinrichtung kann sowohl als Reinigungseinrichtung als auch als Beschichtungseinrichtung eingesetzt erden. Die Anlage 10 kann einen oder mehrere Behandlungseinrichtungen 12 umfassen. Im vorliegenden Ausführungsbeispiel wird der Einsatz als Reinigungseinrichtung beschrieben.
Die Komponenten 16 sind einzeln oder paarweise auf einem Komponententräger 20 angeordnet. Dabei ist vorgesehen, dass der Komponententräger 20 mit einer Kodierung 22 versehen ist, welche von einer Code-Leseeinrichtung 24 erfasst und einer Steuereinheit 26 zugeführt wird. In der Codierung 22 sind Reinigungsparameter zugeordnet, über die die Steuereinheit 26 die Reinigungseinheit entsprechend den jeweiligen Komponentenanforderungen steuert.

Die auf der Transporteinheit 18 auf oder in einem Werkstückträger 19 abgelegten Komponententräger 20 werden durch ein Handling-System 28 erfasst und zusammen mit der Komponente in die Reinigungskammer 14 eingebracht wie eingeschoben, so dass diese gegenüber der Umwelt hermetisch abgeriegelt wird.

Eine perspektivische Darstellung der Reinigungskammer 12 ist den Fig. 2 und 3 zu entnehmen, wobei der Komponententräger 20 in Fig. 2 in ausgefahrener Stellung und in Fig. 3 in eingefahrener Stellung dargestellt ist.

Die Reinigungskammer weist Zulauf- und/oder Ablaufanschlüsse 30, 32, 33 zum Anschluss von Medienbehältern (nicht dargestellt) auf, die in einer Medienversorgung 34 enthalten sind. Die Medienbehälter enthalten die für die gewünschte Behandlung notwendigen Medien wie Reinigungsmedien, Spülmedien, Beschichtungsmedien u. dgl.

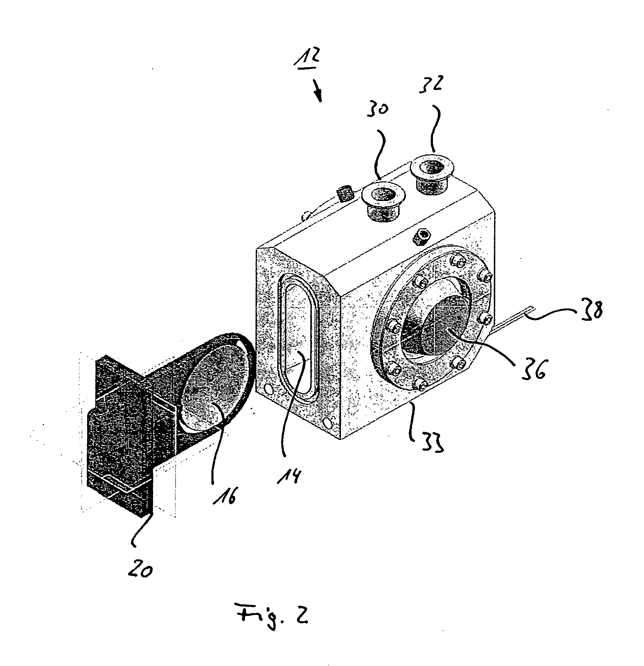

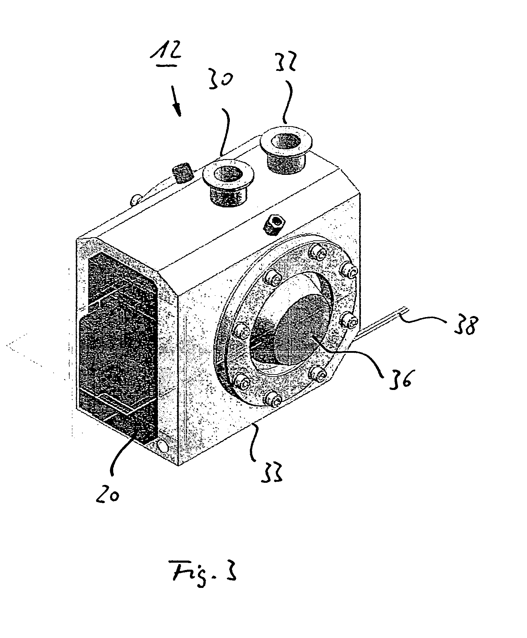

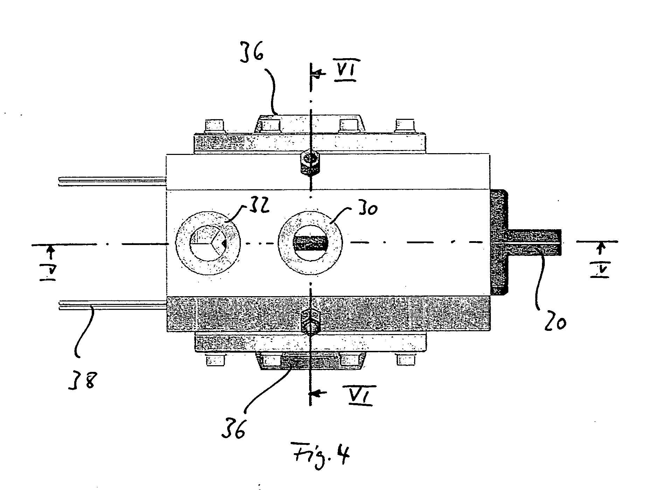

Die Reinigungskammer 14 kann weiterhin verschiedene Aggregate wie beispielsweise Schallgeber 36, Temperiereinrichtung 38, mechanische Reinigungsvorrichtungen und andere Strahlenquellen wie UV- und/oder IR-Strahler umfassen. Dabei werden die Strahlenquellen wie UV- und/oder IR-Strahler und/oder Mikrowellenstrahler über ein Einkoppelfenster 40 in die Kammer 14 eingekoppelt, welches in der Schnittdarstellung gemäß Fig. 4 und 5 dargestellt ist.

Nach dem Reinigungs-/Trocknungsprozess werden die aus dem Komponentenhalter 20 entnommenen Komponenten mittels des Handling-Systems 28 auf weitere Werkstückträger 44 abgelegt und sodann über eine Transporteinheit 46 zur weiteren Verarbeitung beispielsweise einem Beschichtungsverfahren zugeführt.

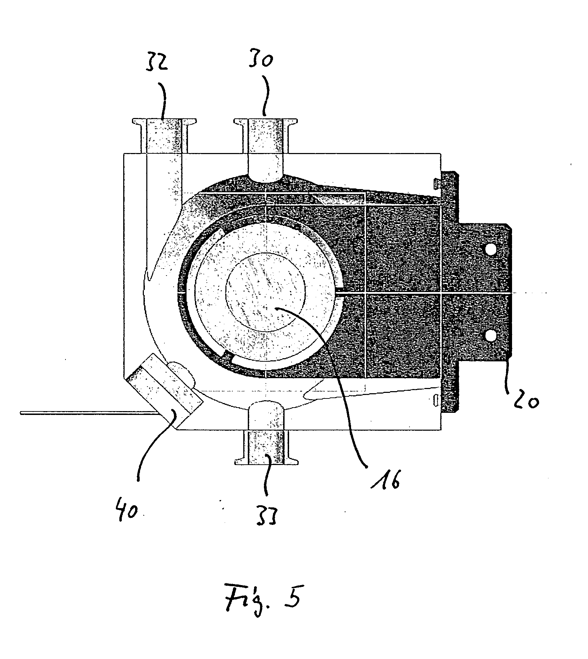

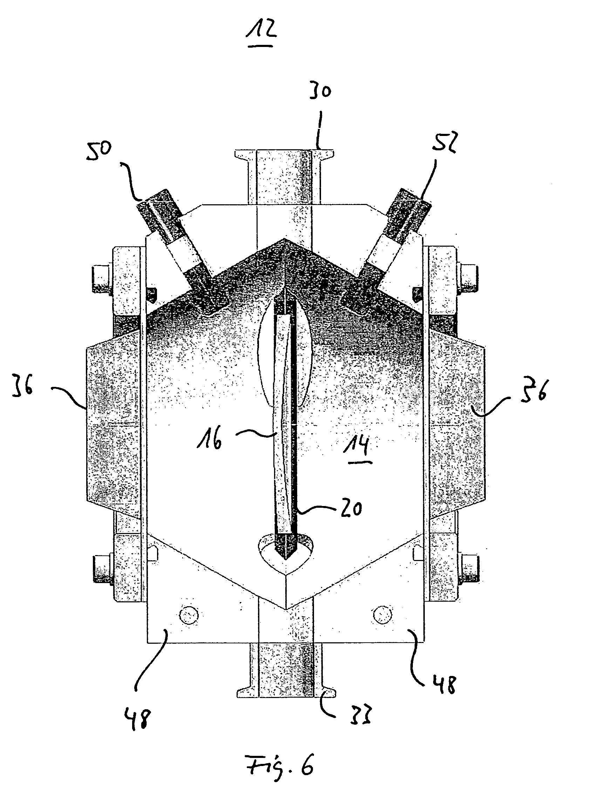

Fig. 6 zeigt einen Querschnitt der Reinigungsvorrichtung 12. Diese umfasst Kammerwände 48, welche die Reinigungskammer 14 umschließen, in den der Komponententräger 20 zusammen mit der Komponente 16 einschiebbar ist und die Kammer 14 durch den Komponententräger 20 gegenüber der Umwelt hermetisch abdichtet. An den Kammerwänden 48 der Reinigungskammer 14 sind im dargestellten Ausführungsbeispiel die Schallgeber 36 vorgesehen, um die Reinigungswirkung zu unterstützen. Zur Zu- und Abfuhr der in dem Medienvorrat 34 enthaltenen Reinigungs- und Spülmedien sind die Anschlüsse 30, 32, 33 vorgesehen, welche über Kanäle in die Kammer 14 gelangen. Der Anschluss 30 ist als Überlauf ausgebildet, über den insbesondere bei der Verdrängungstrocknung das Verdrängungsmedium abfließen kann und wobei das verdrängte Wasser anschließend von der Oberfläche des Verdrängungsmediums in einem separaten Medienbehälter entfernt werden kann.

In der Reinigungskammer sind Düsen 50, 52 integriert, um die Komponente 16 mit geeigneten Medien aus dem Medienvorrat 34 zu reinigen, beispielsweise mittels Spülflüssigkeit und/oder Dampfstrahl-, Trockeneisstrahl und/oder mittels abrasiver Medien. Selbstverständlich kann die Komponente auch mit Reinigungsmedien benetzt werden, die anschließend durch eine Spülflüssigkeit wieder entfernt werden. Zusätzlich kann die Reinigungseinheit 12 mit einem System bestückt sein, das den Reinigungsvorgang durch mechanische Berührung mit einer Oberfläche der Komponente 16 unterstützt. Ferner ist vorgesehen, dass die Reinigungskammer eine Strahlungsquelle aufweist, die die Reinigungswirkung durch Einbringung von Strahlungsenergie wie beispielsweise UV- und/oder IR- unterstützt.

Die zu behandelnde Komponente 16 wird mittels der Komponentenhalterung 20 in die Reinigungskammer 14 eingebracht. Die Daten der Komponente 16 werden mittels der Code-Leseeinrichtung 24 aus der Codierung 22 gelesen und der Steuereinrichtung 26 übergeben, so dass der der Komponente zugeordnete Reinigungsprozess abgerufen werden kann. Das anschließende Reinigungsverfahren kann folgende Schritte umfassen, wobei zunächst die Reinigungskammer 14 mit einem alkalischen oder sauren Reinigungsmedium befüllt wird, das entweder kalt ist oder mit der maximal für die Komponente zulässigen Temperatur bereitgestellt wird. Die Bereitstellung kann durch externe Medienbehälter in der Medienversorgung 34 erfolgen, wobei vorzugsweise die Medienbehälter bereits auf Arbeitstemperatur eingestellt sind. Die Einwirkzeit des Reinigungsmediums ist variabel und kann durch Ultraschall und/oder mechanische Kontakteinwirkung auf die Oberfläche der Komponente unterstützt werden. Des Weiteren können Strahlungsquellen und Düsen 50, 52 zur Unterstützung des Reinigungsprozesses aktiviert werden, wobei nach Ablauf der Reinigungszeit das Reinigungsmedium abgepumpt und in den Medienbehälter beispielsweise über einen Filter zurückgeführt wird. Dabei sind die Medienbehälter redundant ausgeführt, so dass ein Medienwechsel ohne Unterbrechung des Behandlungsverfahrens durchgeführt werden kann.

Das Reinigungsmedium und der noch an der Oberfläche befindliche Schmutz werden sodann im folgenden Schritt durch ein geeignetes Spülmedium, das ebenfalls aus einem weiteren Medienbehälter der Medienversorgung 34 entnommen wird, entfernt, wobei der Spülvorgang aus einem Sprühspülen besteht, bei dem das Medium sofort abgeführt wird oder aus dem Befüllen der Reinigungskammer mit Spülmedium und/oder Ultraschall/mechanischer Einwirkung. Auch eine Kombination aus Sprühspülen und Befüllen der Reinigungskammer mit Spülmedium ist möglich.

Der Sprühspül- oder Tauchprozess kann so aufgeteilt sein, dass die Komponente zuerst mit Stadtwasser mit einer bestimmten Härte behandelt wird, um die Tenside zu entfernen und dann mit DI-Wasser, um ein Verschleppen von Stadtwasser in einen nachfolgenden Prozessschritt zu vermeiden. Die zuvor erwähnten Verfahrensschritte können wiederholt werden.

Nach dem Reinigungsverfahren wird ein Trocknungsverfahren durchgeführt. Hierzu kann die Komponente zusammen mit der Komponentenhalterung 20 in DI-Wasser eingetaucht werden, d. h. dass die Kammer 14 mit DI-Wasser geflutet wird, welches anschließend langsam aus der Kammer 14 abgelassen wird. Hierbei muss die Ablaufgeschwindigkeit des Wassers derart eingestellt sein, dass ein Abreißen des ablaufenden Films vermieden wird und so eine trockene Oberfläche zurückbleibt. Das DI-Wasser kann kalt oder vorzugsweise mit der maximalen für die jeweilige Komponente zulässigen Temperatur bereitgestellt werden. Auch kann eine Vakuumtrocknung als alternatives Trocknungsverfahren eingesetzt werden. Hierzu wird die Reinigungskammer mit einer Vakuumpumpe verbunden und der Druck und die Temperatur innerhalb der Reinigungskammer 14 derart geregelt, dass die Komponente 16 zusammen mit der Komponentenhalterung getrocknet wird.

Unabhängig voneinander kann auch eine Verdrängungstrocknung durch Einbringen eines geeigneten Verdrängungsmediums in die Reinigungskammer 14 erfolgen, wobei das an der Komponente anhaftende Wasser verdrängt wird und anschließend von der Oberfläche des Verdrängungsmediums in einem separaten Medienbehälter entfernt wird. Als Verdrängungsmedium kann beispielsweise trans-1,2-Dichlorethen oder Decalluorpenten oder eine Mischung aus beiden eingesetzt werden, das in dem erfindungsgemäßen Verfahren zu keiner Umweltbelastung führt, da die Reinigungseinheit 12 gegenüber der Umwelt hermetisch abgedichtet ist.

Das Trocknungsverfahren kann aus einem der oben genannten Verfahrensschritte oder einer Kombination der Schritte bestehen. Zusätzlich kann die Trocknung durch Strahlungsenergie unterstützt werden. Als Strahler kommen beispielsweise UV- und/oder IR-Strahler in Frage.

Als besonders vorteilhaft hat sich erwiesen, dass die Komponente 16 einer Vakuumentgasung unterzogen wird. Die Vakuumentgasung kann zusammen mit einer UV- und/oder IR-Bestrahlung angewendet werden.

## Patentansprüche

1. Verfahren zum Behandeln wie Reinigen oder Beschichten von Komponenten (16) wie optischen Gläsern, insbesondere Brillengläsern,
**dadurch gekennzeichnet,**
- **dass** die Komponenten (16) einer hermetisch abdichtbaren Kammer (14) zugeführt werden,
- **dass** der Kammer (14) individuell auf die Komponenten (16) abgestimmte Medien zugeführt werden und
- **dass** die Komponenten (16) während des gesamten Behandlungsverfahrens in der Kammer (14) verbleiben.

2. Verfahren nach Anspruch 1,
**dadurch gekennzeichnet,**
**dass** die Komponenten (16) einzeln oder paarweise in der Kammer behandelt werden und/oder dass der einzelnen Komponente oder dem Komponentenpaar eine Codierung (22) für Parameter zugeordnet ist, welche beim Einschleusen der Komponente oder Komponenten (16) in die Kammer (10) abgefragt wird und dass Behandlungsparameter individuell auf die zu behandelnde Komponente (16) eingestellt werden.

3. Verfahren nach Anspruch 1 oder 2,
**dadurch gekennzeichnet,**
**dass** die zu behandelnde Komponente (16) nach Erfassung seiner spezifischen Codierung (22) in die Kammer (14) eingebracht und diese sodann hermetisch verschlossen wird, wobei die folgenden Verfahrensschritte durchgeführt werden:
- Befüllen der Kammer (14) mit einem Medium wie Reinigungsmedium aus einem Medienbehälter (34),
- Einwirken des Mediums über eine komponentenabhängig einstellbare Zeitdauer,
- Abpumpen des Mediums in den Medienbehälter und
- Befüllen der Kammer mit einem weiteren Medium wie Spülmedium aus einem weiteren Medienbehälter sowie
- Abpumpen des weiteren Mediums in den weiteren Medienbehälter.

4. Verfahren nach zumindest einem der vorhergehenden Ansprüche,
**dadurch gekennzeichnet,**
**dass** die Medien individuell auf die zu behandelnde wie zu reinigende Komponente (16) beispielsweise auf ihren PH-Wert ihrer Temperatur oder der Verweildauer in der Kammer (14) angepasst werden.

5. Verfahren nach zumindest einem der vorhergehenden Ansprüche,
**dadurch gekennzeichnet,**
**dass** die Einwirkzeit durch Ultraschall- und/oder mechanische Kontakteinwirkung auf die Komponente unterstützt wird, wobei die Ultraschallleistung und/oder Ultraschallfrequenz individuell eingestellt wird und/oder dass die Medienwirkung durch Strahlungsquellen und/oder Düsen verstärkt wird, so dass insgesamt eine intensive Behandlung durchgeführt wird.

6. Verfahren nach zumindest einem der vorhergehenden Ansprüche,
**dadurch gekennzeichnet,**
**dass** nach dem Reinigungsvorgang ein Spülvorgang durchgeführt wird, welcher folgende Verfahrensschritte umfasst:
- Spülen mit sofortiger Abführung des Spülmediums und/oder
- Befüllen der Kammer mit dem Spülmedium und Ultraschall-/mechanische Einwirkung und/oder dass die Komponente (16) beim Spülvorgang mit Stadtwasser bestimmter Härte und anschließend mit DI-Wasser behandelt wird, wobei auch eine Kombination aus Sprühspülen und Befüllen der Kammer (14) mit Spülmedium und Ultraschall-mechanischer Einwirkung durchgeführt wird.

7. Verfahren nach zumindest einem der vorhergehenden Ansprüche,
**dadurch gekennzeichnet,**
**dass** nach dem Spülvorgang ein Trocknungsvorgang durchgeführt wird, der folgende Verfahrensschritte umfasst:
- Fluten der Kammer (14) mit DI-Wasser und langsames Ablassen des Wassers, wobei die Ablassgeschwindigkeit des Wassers derart eingestellt wird, dass ein Abreißen des ablaufenden Films vermieden wird und somit eine trockene Oberfläche der Komponente (16) zurückbleibt,
- und/oder dass das DI-Wasser mit einer Temperatur im Bereich von 10° - 95° C, insbesondere 35 ° - 60 ° C oder vorzugsweise mit einer maximalen für die Komponente (16) zulässigen Temperatur bereitgestellt wird.

8. Verfahren nach zumindest einem der vorhergehenden Ansprüche,
**dadurch gekennzeichnet,**
**dass** das Trockenverfahren durch Vakuumtrocknung erfolgt, wobei die Kammer (14) evakuiert wird und der Druck und die Temperatur in der Kammer derart geregelt wird, dass die Komponente (16) sowie die Komponentenhalterung (20) getrocknet wird und/oder dass der Trocknungsvorgang beispielsweise durch Strahlungsenergie in Form von UV- und/oder IR-Strahlung unterstützt wird und/oder dass in der Kammer (14) eine Vakuumentgasung und/oder eine Entgasung durch UV- und/oder IR-Bestrahlung durchgeführt wird.

9. Verfahren nach zumindest einem der vorhergehenden Ansprüche,
**dadurch gekennzeichnet,**
**dass** die Kammer (14) mit einem Verdrängungsmedium oder mehreren Verdrängungsmedien wie beispielsweise trans-1,2-Dichlorethen oder Decafluorpenten oder eine Mischung aus beiden geflutet wird, wobei anschließend das verdrängte Wasser von einer Oberlläche des Verdrängungsmediums in einem separaten Medienbehälter entfernt wird.

10. Vorrichtung zum Behandeln wie Reinigen oder Beschichten von Komponenten (16) wie optischen Gläsern, insbesondere Brillengläsern,
**dadurch gekennzeichnet,**
- **dass** die Vorrichtung eine Kammer (14) zur Aufnahme der zumindest einen Komponente (16) aufweist,
- **dass** die zumindest eine Komponente (16) mittels eines Komponententrägers (20) in die Kammer (14) einbringbar ist, wobei der Komponententräger (20) gleichzeitig die Kammer (14) gegenüber der Umwelt hermetisch abdichtet,
- **dass** die Kammer (14) mit einem oder mehreren Medienbehältern (34) und/oder Kühl-, Temperier-, Strahlungsaggregaten gekoppelt ist und Anschlüsse für eine Medienzufuhr und -abfuhr aufweist.

11. Vorrichtung nach Anspruch 10,
**dadurch gekennzeichnet,**
**dass** die Kammer (14) zur Aufnahme der zumindest einen Komponente (16) oder eines Komponentenpaares ausgebildet ist, wobei der Komponententräger (20) vorzugsweise fest mit der Kammer verbunden ist.

12. Vorrichtung nach Anspruch 10 bis 11,
**dadurch gekennzeichnet,**
**dass** die zumindest eine Komponente (16) oder das Komponentenpaar über eine Belade-/Entladeschleuse (Load-Lock-System) bestückbar ist und/oder dass der Komponententräger (20) als mobile Transporteinheit ausgebildet ist und/oder dass die Kammer (14) Zulauf-/Ablaufanschlüsse (30, 32, 33) für die Medienzufuhr- und/oder - abfuhr aufweist und/oder dass die Kammer (14) Düsen (50, 52) zur Einleitung von Medien aufweist.

13. Vorrichtung nach Anspruch 10 bis 12,
**dadurch gekennzeichnet,**
**dass** die Kammer (14) Ultraschallschwinger (36) zur Unterstützung des Prozesses auf auf die Komponente (16) aufweist und/oder dass die Kammer (14) eine mechanische Reinigungsvorrichtung wie Bürsteneinheit zur mechanischen Reinigung der Komponenten umfasst und/oder dass die Kammer (14) ein Fenster (40) zur Einkopplung von UV- und/oder IR-Strahlung und/oder Mikrowellenstrahlung aufweist.

14. Vorrichtung nach zumindest einem der Ansprüche 10 bis 13,
**dadurch gekennzeichnet,**
**dass** die Kammer (14) Teil einer Reinigungsanlage (10) ist, umfassend eine Transporteinheit (18), auf der die auf Komponententrägern (20) oder Transporteinheiten (21) angeordneten Komponenten (16) der Kammer (12) mittels eines Handlingsystems (28) zugeführt werden und nach Durchführung der Behandlung mittels des Handlingsystems (28) einer weiteren Transporteinheit (46) zur weiteren Bearbeitung zuführbar sind.

15. Vorrichtung nach Anspruch 10 bis 24,
**dadurch gekennzeichnet,**
**dass** die Kammer (14) ein oder mehrere Heizelemente (38) aufweist und/oder dass die Komponente (16) in einer Ebene liegt, welche parallel oder im Wesentlichen parallel zu seitlichen Kammerwänden (48) liegt, an welchen die Ultraschallschwinger (36) angeordnet sind, und/oder dass die Medienbehälter redundant ausgeführt sind.
